# FASCICULE DE BREVET EUROPEEN

(11) **EP 1 330 798 B1**
(45) Date de publication et mention de la délivrance du brevet: **17.06.2009**
(21) Numéro de dépôt: 01982559.5
(22) Date de dépôt: 25.10.2001
(51) Int. Cl.: G07F 19/00, G07F 7/08

(54) **PROCEDE DE PAIEMENT PAR TELEMATIQUE SECURISE**
ZAHLUNGSVERFAHREN MIT SICHEREN DATENKOMMUNIKATIONEN
SECURE TELEMATICS PAYMENT METHOD

(30) Priorité: 25.10.2000 FR 0013708
(43) Date de publication de la demande: 30.07.2003
(73) Titulaire: Remy, Cédric, 92420 Vaucresson (FR)
(72) Inventeur: Remy, Cédric, 92420 Vaucresson (FR)
(74) Mandataire: Degret, Jacques
(86) Numéro de dépôt international: PCT/FR2001/003322
(87) Numéro de publication internationale: WO 2002/035486

(56) Documents cités:
- WO-A-00/45349
- WO-A-00/45351
- WO-A-98/49658
- WO-A-99/14711
- US-A- 5 883 810

## Description

L'utilisation de la télématique pour favoriser les échanges de biens et de services entre agents économiques tend à se généraliser, et devient la base d'une nouvelle économie grâce aux autoroutes de l'information, et notamment au réseau "Internet".

Il est facile à quiconque d'accéder selon un protocole commun (HTTP) aux informations stockées sur la multitude de serveurs répartis dans le monde, conçus selon une même norme (WWW), et reliés entre eux par un réseau standard (TCP/IP), au moyen d'un poste-client muni d'un logiciel approprié (navigateur).

Grâce à l'Internet, toute société commerciale dispose des moyens pour ouvrir une boutique virtuelle qu'un consommateur-internaute peut visiter à partir de n'importe quel point du globe.

Cette facilité d'accès, et le type "ouvert" du réseau, dans le sens où les connexions ne sont limitées ni par le nombre, ni par les caractéristiques des postes-clients connectés, a été la clé du succès d'"Internet".

Mais cela est un inconvénient quand la confidentialité de certaines données échangées au moyen du réseau ou archivées sur les serveurs doit être préservée.

C'est le cas, justement, quand le consommateur-internaute, après avoir décidé de passer une commande, doit régler ses achats.

Le moyen le plus fréquemment proposé est un règlement par carte de crédit: le consommateur doit saisir en ligne dans un formulaire le type et le numéro de la carte, sa date limite de validité, et le nom du titulaire.

Transmises sans précaution, ces mêmes informations pourraient être interceptées par des tiers et utilisées pour effectuer d'autres achats. La transaction financière est donc généralement traitée au moyen d'un protocole sécurisé (HTTPS) qui se substitue au protocole courant (HTTP) et fait appel à des procédés de cryptage de données.

Cependant, même si ces procédés font appel à des techniques mathématiques très complexes, dans la mesure où les données cryptées peuvent être interceptées, elles encourent le risque d'être décodées, notamment par des groupes de personnes malveillantes agissant de manière simultanée et concertée.

Le brevet américain US-6.012.144 au nom de T. Pickett, publié le 4 janvier 2000, apporte une solution au problème de la confidentialité des numéros de cartes de crédit devant circuler sur Internet, et être stockés sur des serveurs connectés à ce réseau, en transmettant une première partie du numéro codé sur le réseau TCP/IP, la seconde partie sur le réseau téléphonique, et en archivant les deux parties dans deux bases de données différentes. Le SGBD est connecté au serveur HTTP par une liaison dédiée qui n'est pas une liaison IP, et qui agit donc comme un pare-feux.

En plus du problème posé par l'interception possible d'informations sensibles, il importe que la preuve de l'accord de l'acheteur soit fournie au cours de la procédure de paiement par carte de crédit, et par là même de s'assurer de l'identité du titulaire.

Le système décrit dans le brevet US-6.012.144 utilise donc le réseau téléphonique pour appeler au moyen d'un serveur vocal la personne à l'origine de la transaction, afin de vérifier automatiquement son identité. L'acheteur doit composer un code d'identification personnel (PIN), puis il est guidé par le serveur vocal pour confirmer ou annuler sa commande en appuyant sur les touches appropriées.

La méthode et le dispositif décrits dans le brevet US-6.012.144 résolvent de façon originale le problème de la sécurisation des transactions sur Internet, mais les avantages pratiques et économiques du paiement par carte de crédit sont très réduits par la complexité du système.

Un autre système de sécurisation des paiements sur Internet repose sur l'existence d'un intermédiaire qui sécurise les paiements en détenant les informations sensibles des consommateurs et des commerçants pour qu'elles ne circulent pas sur Internet.

Un tel système est décrit dans la demande de brevet internationale WO99/66436, au nom de la société Protx, publiée le 23 décembre 1999.

Les vendeurs, les acheteurs, les établissements financiers et un opérateur intermédiaire sont tous connectés à Internet. Les bases de données contenant séparément les informations relatives aux acheteurs et aux vendeurs sont reliées entre elles par un réseau privé. Les vendeurs et les acheteurs accèdent au réseau privé de l'opérateur au moyen de passerelles connectées à Internet, et placent indépendamment leurs ordres de transactions. L'échange et le rapprochement des informations confidentielles sont réalisés au moyen du réseau privé, et donc de façon sûre, sans qu'une partie quelconque puisse connaître tous les détails concernant l'autre. Une passerelle relie également directement les banques au réseau de l'opérateur pour le traitement de la transaction financière en soi.

Ce type d'organisation permet certes une relation sécurisée entre commerçants et consommateurs, mais fermée, et introduit une logique contraire à celle d'Internet qui est fondamentalement un réseau ouvert: tout internaute peut effectuer des achats sur tout site commercial sans contrainte préétablie.

Le procédé pour effectuer des transactions sécurisées sur Internet divulgué dans le brevet américain US-6.088.683, au nom de R. Jalili, publié le 11 juillet 2000, évite l'écueil de l'obligation d'enregistrement des commerçants aussi bien que des consommateurs auprès d'un opérateur en reprenant une méthode voisine de celle décrite dans le brevet US-6.012.144, tout en la simplifiant pour la rendre plus attractive.

Les informations concernant la carte de crédit du consommateur ne circulent jamais sur l'Internet et, par conséquent, sont à l'abri d'un détournement frauduleux. Comme dans la méthode exposée dans le brevet US-6.012.144, une procédure de rappel d'un numéro de téléphone enregistré au préalable permet d'authentifier le donneur d'ordre.

Si des informations financières sensibles ne sont pas transmises sur le réseau ouvert, il n'en demeure pas moins qu'elles doivent être archivées sur le site de l'opérateur de service. Cela peut être un risque, malgré le pare-feux et les divers dispositifs de sécurité qui pourraient être mis en place par l'opérateur.

Les systèmes et procédés de paiement dans le cadre de transactions commerciales décrits dans la demande de brevet internationale WO00/45349 au nom de K. MCLELLAN et al., publiée le 3 août 2000, associent à des données sensibles stockées de manière sécurisée, telles que des numéros de cartes de crédit ou des numéros de comptes bancaires, un numéro de compte électronique d'un format similaire à un numéro de carte classique mais ne correspondant à aucun moyen de paiement réel, et qui peut donc circuler sur l'Internet. Pour payer une marchandise, l'acheteur transmet son numéro de compte électronique au vendeur, qui l'envoie à un serveur de paiement avec les références de la commande. L'acceptation du paiement est subordonnée à sa validation par l'acheteur, par l'intermédiaire d'un opérateur de services. L'acheteur doit se connecter de préférence au moyen d'une liaison sécurisée sur l'Internet, notamment cryptée, avec cet opérateur de services, mais, dans le cas où il ne le serait pas, une requête de validation peut lui être transmise par SMS.

Un tel système présente l'avantage que l'acheteur ne transmet aucune information sensible au vendeur, mais il présente l'inconvénient de laisser au vendeur la maîtrise de la transmission de cette information au serveur de paiement.

Il ressort donc de l'état de la technique tel que rappelé ci-dessus que des procédés de paiement par télématique sécurisés sont connus, mais qu'il n'existe à ce jour aucun procédé simple et économique donnant toutes garanties de sécurité.

### DESCRIPTION GÉNÉRALE DE L'INVENTION

La présente invention concerne donc un procédé de paiement par télématique sécurisé visant à pallier les inconvénients des méthodes de sécurisation antérieures.

Elle a plus précisément pour objet un procédé du type de ceux contrôlant:
a) un réseau ouvert utilisant le protocole TCP/IP, préférentiellement le réseau "Internet", organisé selon une architecture de type "client/serveur", et reliant entre eux un premier groupe de serveurs, au moyen desquels des commerçants effectuent des transactions commerciales, un deuxième groupe de serveurs, au moyen desquels des banques effectuent des transactions financières, un groupe de clients, au moyen desquels des consommateurs effectuent des transactions commerciales et financières, et un troisième groupe de serveurs au moyen desquels un opérateur de services effectue des opérations de validation de ces transactions,
b) un réseau téléphonique reliant le premier groupe de serveurs aux serveurs du troisième groupe,
c) un réseau fermé utilisant un mode de liaison de type "point à point" et reliant ledit deuxième groupe de serveurs audit troisième groupe de serveurs,
d) un réseau de téléphonie mobile reliant ledit troisième groupe de serveurs auxdits consommateurs,
et comportant les étapes suivantes,
a) une étape préalable au cours de laquelle ledit opérateur de services enregistre les données nominatives desdits consommateurs, comprenant au moins un numéro d'appel du réseau de téléphonie mobile, ainsi que les informations financières les concernant, dont le numéro de compte bancaire de chacun desdits consommateurs, et leur communique leurs données d'identification par des moyens totalement sécurisés, lesdites données d'identification comprenant
   - un code-adresse bancaire comportant un premier champ d'identification du pays et un second champ d'identification de la banque de chacun des consommateurs,
   - un numéro d'identification de compte électronique attaché audit numéro de compte bancaire,
   - un code d'identification de chacun des consommateurs,
b) une première étape au cours de laquelle un acheteur accède au moyen de l'un des clients au site d'un vendeur hébergé au moyen de l'un des serveurs dudit premier groupe et effectue une commande de marchandises,
c) une deuxième étape au cours de laquelle ledit acheteur communique audit vendeur les deux premières des données d'identification précitées le concernant sur ledit réseau ouvert au moyen du client correspondant,
d) une troisième étape au cours de laquelle ledit vendeur établit une liaison avec ledit opérateur au moyen du réseau ouvert et lui transmet une chaîne d'identification, comprenant la raison sociale et les coordonnées bancaires dudit vendeur, ainsi que les deux premières données d'identification précitées dudit acheteur, et les références de ladite commande,
e) une quatrième étape au cours de laquelle ledit opérateur établit une liaison au moyen du réseau de téléphonie mobile et transmet audit numéro d'appel une demande d'authentification constituée d'un message court (SMS) contenant ladite raison sociale, lesdites références et l'indication d'une action à effectuer par ledit acheteur sur les touches de son téléphone portable,
f) une cinquième étape au cours de laquelle ledit opérateur établit une liaison avec ledit vendeur au moyen dudit réseau téléphonique et transmet la confirmation du paiement de ladite commande après vérification desdites informations financières, et
g) une sixième étape au cours de laquelle ledit opérateur établit une liaison avec le deuxième groupe de serveurs au moyen du réseau fermé et transmet un ordre de transaction aboutissant au paiement dudit vendeur par ledit acheteur.

Les caractéristiques essentielles du procédé de paiement par télématique sécurisé décrit dans ses grandes lignes ci-dessus sont que, selon l'invention, lesdites données d'identification communiquées au cours desdites deuxième et troisième étapes comprennent de plus le code d'identification de chacun desdits consommateurs, ladite vérification au cours de ladite cinquième étape comprenant le rapprochement dudit code-adresse bancaire, dudit numéro d'identification et dudit numéro de compte bancaire, et en ce que :
a) ladite étape préalable comporte le télédéchargement périodique à partir dudit troisième groupe de serveurs par ledit premier groupe de serveurs au moyen dudit réseau ouvert de tables de correspondance entre lesdits codes-adresses bancaires et les chemins sur ledit réseau ouvert (URL) identifiant, sur les serveurs de l'opérateur de services des banques des acheteurs, les pages en langage hypertexte à balises (HTML) de demandes de virements correspondantes de chacune desdites banques,
b) ladite troisième étape se décompose en une première phase intermédiaire au cours de laquelle le vendeur transmet au moyen dudit réseau ouvert sans sécurisation ladite chaîne d'identification à l'acheteur, ledit chemin correspondant au code-adresse bancaire dudit acheteur déterminé au moyen desdites tables et lesdites références, et lui retransmet sans sécurisation les trois données d'identification, une deuxième phase intermédiaire au cours de laquelle ledit acheteur accède à la page correspondante de sa banque parmi lesdites pages au moyen dudit réseau ouvert; et une troisième phase ou phase finale au cours de laquelle, outre ses trois données d'identification, ledit acheteur communique également à l'opérateur sur le réseau ouvert sans sécurisation, au moyen de ladite page, ladite chaîne d'identification du vendeur et lesdites références.

Il doit être noté que, dans le procédé de paiement par télématique sécurisé selon l'invention, ladite chaîne d'identification du vendeur comprend au moins un numéro de téléphone dudit réseau téléphonique, et en ce que la notification de la confirmation de la commande est adressée par l'opérateur au vendeur de préférence sous la forme d'un message court (SMS).

Avantageusement, les codes-adresses bancaires et les numéros d'identification sont sauvegardés sur les poste-clients des consommateurs.

De préférence, l'action à effectuer par l'acheteur pour s'identifier est la frappe du code SIM de son téléphone portable.

On tirera bénéfice du fait que la quatrième étape du procédé comporte une phase préalable au cours de laquelle ledit acheteur établit une liaison avec ledit opérateur au cas où ledit acheteur n'était pas connecté audit réseau téléphonique mobile, et reçoit une liste comportant au moins ladite demande d'authentification.

Les pages de demandes de virement sont archivées sur ledit troisième groupe de serveurs de l'opérateur de services.

Selon l'invention, les caractéristiques supplémentaires suivantes du procédé de paiement par télématique sécurisé sont avantageuse :
a) chacun des serveurs dudit premier groupe présente au moins une page en langage hypertexte à balises (HTML) comportant :
   - un premier formulaire de saisie du code-adresse bancaire incluant une première liste déroulante offrant à l'acheteur un choix des pays et une seconde liste déroulante offrant un choix des banques,
   - un second formulaire de saisie dudit numéro d'identification et du code d'identification,
   - un premier script conforme à la norme logicielle CGI dont l'exécution est déclenchée par la confirmation de la commande et produit la recherche dans la table de correspondance du code-adresse bancaire et la lecture du chemin correspondant, la lecture des données constituant la chaîne d'identification du vendeur, la formation des références de ladite commande, ainsi que la formation et le transfert à l'acheteur d'une trame de données comprenant ledit chemin, ladite chaîne d'identification, lesdites références et les trois données d'identification de l'acheteur,
   - un deuxième script conforme à la norme logicielle CGI dont l'exécution est déclenchée par la réception de la trame de données comprenant ledit chemin, ladite chaîne d'identification du vendeur, lesdites références et les trois données d'identification de l'acheteur, envoyée par ledit vendeur, et produit la redirection du navigateur dudit acheteur vers ledit chemin, l'affichage sur l'écran du client dudit acheteur de la demande de virement correspondant audit chemin parmi lesdites demandes de virements, ainsi que le chargement dans la demande de virement de ladite chaîne d'identification du vendeur, desdites références de la commande, et des trois données d'identification de l'acheteur, et
b) chacun des serveurs dudit premier groupe présente au moins un fichier contenant les données composant ladite chaîne d'identification du vendeur correspondant.

Un grand bénéfice technique est dû au fait que :
a) lesdites demandes de virements comportent un bouton d'enregistrement et un troisième script conforme à la norme logicielle CGI dont l'exécution est déclenchée par ledit bouton d'enregistrement et produit le transfert des données de ladite demande de virement audit opérateur,
b) chacun des serveurs dudit troisième groupe comporte un quatrième script conforme à la norme logicielle CGI dont l'exécution est déclenchée par la réception des données de ladite demande de virement, et produit l'enregistrement et l'analyse des données de ladite demande de virement, ainsi que le déclenchement de ladite quatrième étape.

Les avantages de ces caractéristiques supplémentaires sont renforcés si, de préférence, la page comportant le formulaire de saisie comprend de plus un cinquième script conforme à la norme logicielle CGI dont l'exécution est déclenchée à l'ouverture et produit la recherche, la lecture et le chargement des trois données d'identification de l'acheteur dans le formulaire, dans le cas où lesdites trois données d'identification ont été sauvegardées par ledit acheteur sur son poste-client.

### BRÈVE DESCRIPTION DES DESSINS

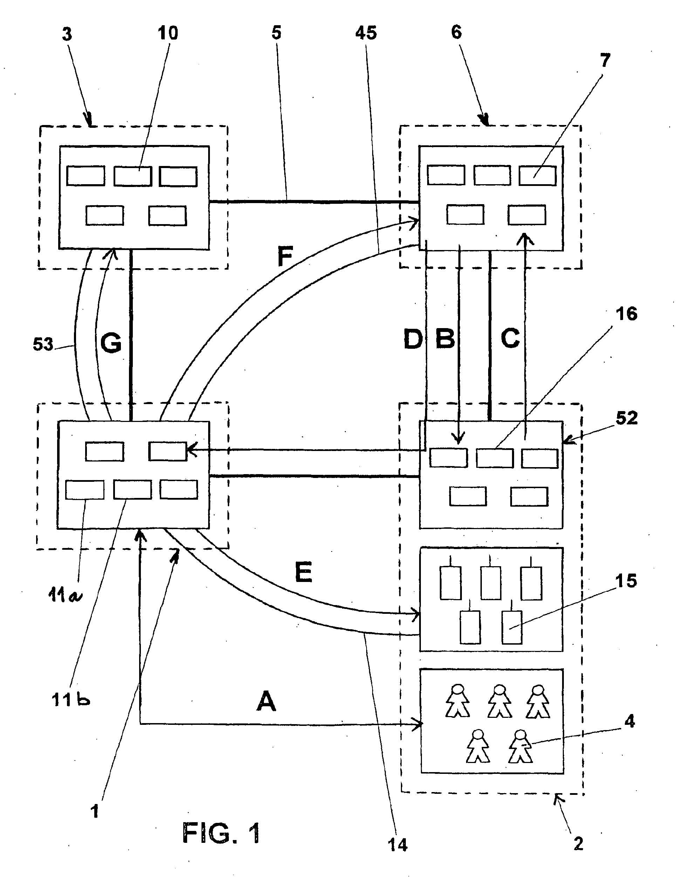

Le schéma de la Figure 1 montre les éléments essentiels et les principales étapes du procédé de paiement par télématique sécurisé selon l'invention.

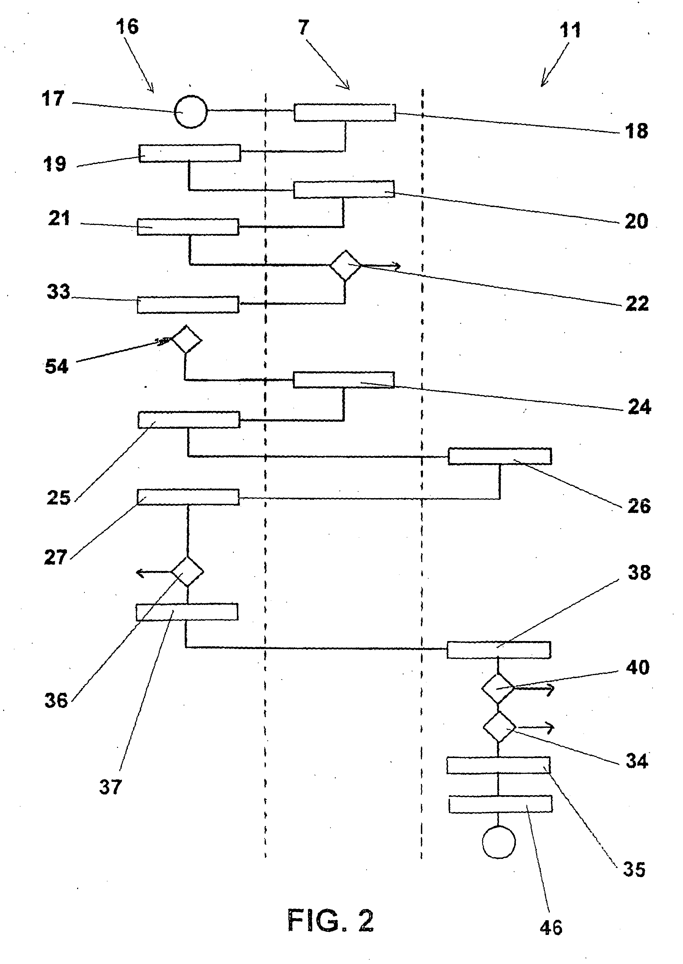

Le diagramme de la Figure 2 indique en détail les enchaînements des étapes, phases et événements qui caractérisent le procédé selon l'invention.

La Figure 3 est une vue schématique montrant les éléments d'information et les objets fonctionnels contenus dans une demande de virement électronique mise en oeuvre par le procédé selon l'invention.

Les Figures 4a et 4b montrent respectivement les éléments d'information et les objets fonctionnels contenus dans l'écran de demande de confirmation de la transaction, et dans l'écran des demandes d'authentification en attente, selon un mode de réalisation avantageux de la présente invention.

### DESCRIPTION D'UNE FORME D'EXÉCUTION PRÉFÉRÉE DE L'INVENTION

Les références à la Figure 1 serviront à expliquer les grandes lignes d'une forme d'exécution préférée du procédé de paiement par télématique sécurisé selon l'invention.

Ce procédé permet à un opérateur de services (1) de traiter directement sur les comptes bancaires des internautes (2), tenus dans différentes banques (3), des demandes de virement confirmées par les acheteurs (4) pour payer des achats sur Internet (5), puis de notifier les commerçants (6) des paiements avant l'exécution des virements.

Pour effectuer un achat sur le site Internet (7) d'un commerçant (6), l'acheteur (4) doit passer par une cinématique de création de commande comprenant l'étape de la sélection d'une méthode de paiement. L'acheteur (4) qui choisit de payer ainsi que le préconise la présente invention sélectionne (C) sur une page appropriée du site (7) du commerçant (6) le code-adresse (9) de sa banque (10) parmi l'ensemble des codes-adresse (9) des banques (3) par pays proposant cette nouvelle méthode de paiements. A ce code-adresse (9), le site commercial (7) fait correspondre l'adresse URL (Uniform Resource Location) identifiant, sur le serveur (11) de l'opérateur de services (1) de la banque (10) de l'acheteur (4), la page de demande de virement (12) utilisée pour le paiement d'achats sur Internet.
C'est précisément la confirmation de la commande par l'acheteur (4) qui déclenche l'appel (D) de cette page (12) à partir du code-adresse (9) renseigné dans la commande et donc qui affiche automatiquement la demande de virement (12).

Dès qu'une commande d'achats enregistrée sur le site (7) Internet d'un commerçant (6) est confirmée par un acheteur (4), le serveur (11a) de l'opérateur de services (1) de la banque (10) de l'acheteur (4) affiche une demande de virement (12) et affiche une indication d'action (par exemple, une seule action telle que cliquer sur le bouton d'une souris) que l'acheteur doit exécuter pour enregistrer (47) ou au contraire pour annuler la demande de virement. Selon le souhait de l'internaute (2), l'affichage de la demande de virement (12) est facultatif si aucun message interactif de contrôle n'est nécessaire. Dans ce cas, l'enregistrement est fait par défaut. Pour pouvoir être opérée sur le compte bancaire de l'acheteur (4), une demande de virement doit comporter l'adresse bancaire du commerçant (6), ou destinataire du paiement, et celle de l'acheteur (4), ou donneur d'ordre, ainsi que les informations propres à la commande. A la création de la demande de virement, l'adresse bancaire du commerçant (6)(le RIB de son compte à créditer), l'adresse bancaire de l'acheteur et son identifiant ainsi que les informations récapitulant la commande sont transmises comme paramètres du site commercial (7) vers le serveur (11a) de l'opérateur de services (1) de la banque (10) de l'acheteur (4). Quand la demande de virement (12) est enregistrée sur Internet (5) par l'acheteur (4), le serveur (11a) reçoit et stocke un virement à confirmer qui va devoir être confirmé ensuite par l'acheteur (4).

Le virement à confirmer, que le serveur (11a) de l'opérateur de services (1) de la banque (10) de l'acheteur (4) reçoit et stocke quand l'acheteur (4) enregistre la demande de virement, est transmis sur Internet (5). Etant donné qu'Internet (5) est un réseau ouvert, les informations qui y circulent peuvent être interceptées. En conséquence, l'enregistrement de la demande de virement par l'acheteur ne constitue pas un acte de paiement à proprement parler mais seulement l'enregistrement de la demande d'un acte de paiement. Pour constituer l'acte de paiement sécurisé, la demande de virement reçue et stockée par le serveur (11a) de l'opérateur de services (1) de la banque (10) de l'acheteur (4) est sortie techniquement de l'environnement Internet (5), puis est confirmée par l'acheteur (4) par un réseau (14) autre qu'Internet (5), et par exemple par le réseau des télécommunications ou du câble. Plus précisément, la demande de confirmation (E) nécessaire pour payer par virement le commerçant (6) est faite par téléphone mobile (15). Quand la demande de confirmation (E) est confirmée, le serveur (11b) de télécommunication de l'opérateur de services (1) de la banque (10) de l'acheteur (4) reçoit et stocke un virement confirmé. Le virement confirmé constitue vis-a-vis de l'acheteur (4) l'acte de paiement sécurisé d'un achat sur Internet (5). Le virement est alors autorisé à être traité sur le compte de l'acheteur (4) par l'opérateur de services (1) de sa banque pour payer le commerçant (6).

Pour le bénéficiaire, le traitement d'un virement par un opérateur de services (1) ou par une institution bancaire (3) ne se traduit pas par le crédit immédiat de son compte. Il est en effet bien connu que, si les banques (3) procèdent quotidiennement à une compensation inter-bancaire des soldes, un ou plusieurs jours sont néanmoins nécessaires pour que le compte du destinataire (6) du virement soit crédité. De surcroît, pour que le commerçant (6) soit averti du crédit de son compte, sa banque (3) doit transmettre des avis de crédit ou des relevés de comptes. En conséquence, le déclenchement de la livraison d'un produit physique (ou le téléchargement d'un produit numérique ou d'un service) correspondant à un achat sur Internet (5) serait retardé du délai de traitement du virement par le réseau bancaire. Un tel système va à l'encontre de la rapidité que favorise Internet (5). Pour pallier cet asynchronisme dans le flux du paiement, l'opérateur de services (1) de la banque (10) de l'acheteur (4) envoie une notification de paiement (F) au commerçant (6) dès que le virement est confirmé par l'acheteur (4). Cette notification (F) garantit le commerçant (6) d'un crédit ultérieur de son compte bancaire correspondant à un achat sur Internet (5) et lui permet de clore ainsi le cycle de paiement d'une commande (B). Cette notification (F) effectuée dès le virement confirmé par l'acheteur (4) permet un cycle de paiement interactif et, donc, un déclenchement rapide des livraisons ou un téléchargement immédiat des produits numériques ou des services.

La Figure 1 est un schéma qui représente globalement l'ensemble des composants clefs et le flux d'information entre ces composants clefs pour effectuer un paiement sécurisé sur Internet (5) par demande de virement confirmée par l'acheteur (4), puis opérée sur son compte bancaire.

Les références supplémentaires à la Figure 2 serviront à expliquer les détails de la procédure de paiement selon l'invention.

L'acheteur (4), à partir de son ordinateur personnel (16) équipé d'un modem, se connecte (17) à un site commercial (7) pour effectuer des achats (18). L'acheteur créé des commandes (19) en suivant une cinématique (20) préétablie sur le site (7) afin de rendre possible les achats. La cinématique des achats oblige l'acheteur à passer, par exemple, par les étapes de sélection des articles, de renseignement de l'adresse de livraison et de facturation, de précision du moyen d'expédition, de sélection du moyen de paiement (21), de confirmation des commandes et de notification de la confirmation des commandes. Seule l'étape de la sélection (21) du moyen de paiement parmi celles nécessaires à la création de commandes concerne la présente invention. Le commerçant doit en effet proposer cette présente invention comme méthode de paiement. Le commerçant propose à l'acheteur, alors, l'option de payer soit conformément au protocole préconisé par ladite présente invention, soit par carte de crédit, soit encore par chèque.

Quand l'acheteur choisit (22) de payer ses commandes par la présente invention, il sélectionne sur la page HTML de sélection des moyens de paiement le code-adresse de sa banque et il renseigne son eCompte (31) et son identifiant. A ce code-adresse banque correspond l'adresse URL identifiant sur le serveur de l'opérateur de services (1) de sa banque (10) la page de demande de virement utilisée pour le paiement d'achats sur Internet (24). La sélection de codes-adresse banques par les acheteurs sur les sites des commerçants autorise la présente invention à être opérée par différentes banques proposant ce moyen de paiement ou par un opérateur opérant des comptes dans différentes banques. La présente invention permet donc aux acheteurs d'effectuer des paiements sur Internet quelle que soit la banque permettant ce service sur leur compte. Cette sélection est donc un système ouvert de paiements sécurisés sur Internet.

Pour que l'acheteur puisse sélectionner le code-adresse de sa banque, le site commercial (7) a au préalable téléchargé du site de l'opérateur (1) la liste de toutes les banques permettant d'utiliser cette méthode de sécurisation des paiements sur Internet. Cette table est maintenue par l'opérateur puisqu'il opère ce service de paiements sur des comptes bancaires. Cette table téléchargeable contient, par pays, par code banque, les adresses URL identifiant sur les serveurs des différentes banques (3) les pages de demandes de virement à utiliser pour effectuer des paiements sur Internet avec l'opérateur (1) en charge de la présente invention.

Quand l'acheteur (4) choisit de payer ses commandes par la présente invention, il sélectionne le code-adresse de sa banque (10). Préférentiellement, cette sélection est faite par pays et par banque. Il est possible d'envisager l'existence de plusieurs serveurs par banque ou, inversement, un serveur pour plusieurs banques. Dans tous les cas, à chaque code-adresse banque correspond toujours une adresse URL identifiant une page de demande de virement (12) nécessaire à la présente invention et destinée à être opérée par une banque.

L'acheteur (4) est amené à suivre les différentes étapes nécessaires à l'enregistrement de commandes sur le site commercial (7). Parmi ces étapes, il a choisi comme moyen de paiement la présente invention et il a donc sélectionné le code-adresse de la banque (10) dans laquelle se trouve le compte bancaire avec lequel il veut effectuer les paiements. C'est à la confirmation (54) de la commande que sera déclenchée la création automatique (24,25,26) de la demande de virement (12) à partir du code-adresse banque renseigné dans la commande et de l'adresse URL correspondant à ce code-adresse banque et, donc, que sera permis son affichage (27) sur l'écran de l'ordinateur (16) de l'acheteur (4).

Pour pouvoir être opérée sur le compte bancaire de l'acheteur, la demande de virement (12) doit comporter l'adresse bancaire (28) du bénéficiaire (6), à savoir le destinataire du paiement (29), et celle de l'acheteur, c'est-à-dire le donneur d'ordre, ainsi que les informations (30) concernant la commande et la notification du paiement au commerçant (6). L'enregistrement (47) de la demande de virement ne constitue pas l'acte de paiement de la commande mais la préparation de l'acte de paiement. C'est pour cela qu'il peut être facultatif. Si, pour des raisons techniques externes à l'invention (problème de connections sur Internet par exemple), la demande de virement (12) ne pouvait être enregistrée, l'internaute (4) peut revenir sur la commande qu'il a confirmée sur le site commercial (7) et déclencher à nouveau l'affichage automatique (27) sur son ordinateur (16) de la demande de virement (12) à partir du serveur (11a) de l'opérateur de services (1) de sa banque (10).

La demande de virement (12) doit comporter l'adresse bancaire (28) complète du commerçant (6). Pour qu'une demande de virement (12) puisse être opérée sur le compte bancaire de l'acheteur (4) quel que soit le site commercial (7), l'adresse bancaire (28) dans la banque (3) du bénéficiaire (6) est transmise comme paramètre lors de l'appel (24) de la page de la demande de virement (12). L'adresse bancaire complète (28) qui doit être transmise du site commercial (7) au serveur (11a) de l'opérateur de services (1) de la banque de l'acheteur doit donc comporter le code pays, le code banque, le code guichet, le numéro de compte et la clef du compte pour être en mesure de composer le numéro de compte bancaire international ou International Bank Account Number (IBAN). A cette condition, tout virement est effectué à destination des banques de tout commerçant (6). L'adresse bancaire (28) du bénéficiaire représente un compte à créditer. Par la présente invention, ce compte est essentiellement crédité par les paiements des commandes. Mais cette adresse bancaire circule sur Internet. En conséquence, les banques proposant cette présente invention et hébergeant ces comptes se chargent d'authentifier (par la signature du titulaire, par exemple) les mouvements débiteurs tels que les virements manuels.

La demande de virement (12) doit comporter également l'adresse bancaire (9,31) de l'acheteur. Le compte bancaire du donneur d'ordre (4) est identifié par un numéro d'identification appelé eCompte (31). Ce eCompte (31) est défini par l'opérateur de services (1) de la banque (10) de l'acheteur (4). Il correspond à un compte courant appartenant à l'acheteur (4). Seul l'opérateur est capable d'effectuer la correspondance entre le numéro du compte courant de l'acheteur (4) et son eCompte (31). Si le eCompte (31) diffère du code guichet et du numéro de compte courant de l'acheteur (4) selon le choix de gestion de l'opérateur de services (1), l'adresse bancaire de l'acheteur (4) renseignée sur la demande de virement (12) est complète sous la forme du code pays, du code banque (9) et du eCompte (31) car le eCompte correspond au code guichet et au numéro de compte bancaire. Si le eCompte (31) diffère du code guichet et du numéro de compte courant de l'acheteur, l'adresse bancaire (9,31) de ce dernier présente la qualité d'identifier un compte courant dans une banque (10) sans pour autant dévoiler le véritable numéro du compte bancaire. L'adresse bancaire (9,31) sous cette forme est appelée eIBAN (e International Bank Account number) ou le IeBAN (International eBank Account Number). La présente invention permet l'existence et l'utilisation d'un eCompte (31) sous une même forme dans différentes banques. Donc, bien au-delà du paiement sécurisé sur Internet (5), cette adresse complète identifie un acheteur et même, plus précisément, un compte bancaire payeur. Cette identification (32) est unique puisque un compte bancaire est unique dans l'agence d'une banque. Cette identification (32) peut alors devenir l'unique référence " clients " utilisée par toutes les sociétés ou organismes que l'acheteur (4) paye à partir de ce compte. Par exemple, l'acheteur (4) pourra être connu chez les commerçants (6) par cette identification (32). Pour l'acheteur (4), l'intérêt est d'avoir une identification unique quels que soient les commerçants ou organismes. Pour le commerçant (6), le eCompte (31) permet de personnaliser les clients. D'autre part, afin d'éviter à l'acheteur (4) de renseigner manuellement son adresse bancaire (9, 31) sur chaque demande de virement ou sur chaque commande, ladite adresse est, préférentiellement, sauvegardée sur son ordinateur (16) par un logiciel fourni par l'opérateur (1) et téléchargeable gratuitement à distance. Ce logiciel permet de stocker plusieurs adresses bancaires en identifiant l'adresse courante utilisée. Automatiquement, la création d'une commande ou d'une demande de virement recherche (33) l'adresse courante utilisée sur l'ordinateur (16) de l'acheteur (4). Pendant l'affichage (27) de la demande de virement (12) ou encore antérieurement, lors d'une prise de commande, il est possible de changer l'adresse de l'acheteur (4) en sélectionnant une des autres adresses pré-renseignées ou de la renseigner manuellement.

La demande de virement (12), pour être complète, doit comporter les adresses bancaires (28,32) du bénéficiaire (6) et respectivement de l'acheteur (4) ainsi que les informations (30) concernant la commande et la notification du paiement au commerçant (6). Une demande de virement (12) est créée pour payer une commande sur Internet (5). L'acheteur (4), éventuellement, visualise et contrôle sur l'écran de son ordinateur (16) la demande de virement créée automatiquement. Donc, la demande de virement contient les informations correspondant à la commande. Pour que la demande de virement soit enregistrée puis traitée par l'opérateur de services (1) de la banque de l'acheteur, les informations propres à la commande sont passées en paramètres en plus des adresses bancaires du destinataire (6) et du donneur d'ordre (4). Les informations provenant de la commande quand elle a été acceptée par l'acheteur (4) sont le montant total, la devise, et la date de la commande. Le montant total et la devise de la commande deviennent le montant et la devise à virer du compte de l'acheteur (4) vers le compte du commerçant (6). Quand la demande de virement (12) est confirmée (40), le commerçant (6) est notifié (35) du paiement afin de clore le cycle de paiement de la commande. La notification (F) du paiement au commerçant (6) par l'opérateur de services (1) de la banque de l'acheteur (4) a comme objectif de prévenir le commerçant (6) d'un virement prochain correspondant à une commande sur le compte à créditer qu'il a transmis. Cette notification (F) doit comporter le numéro de la commande et, éventuellement, le numéro de la facture pour que le commerçant puisse rapprocher une notification à la commande correspondante et la considérer comme facturée. En conséquence, en plus du montant total et de la devise de la commande détaillés ci-dessus, le numéro de commande, le nom du fournisseur et, éventuellement, le numéro de la facture sont aussi transmis comme paramètres pour l'affichage de la demande de virement.

La présente invention comme méthode de paiement commence par la création d'une demande de virement (12) déclenchée à la confirmation (54) d'une commande par l'acheteur (4). Cette demande de virement (12) est éventuellement affichée sur le serveur (11a) de l'opérateur de services (1) de la banque de l'acheteur (4) puisque ce dernier a sélectionné auparavant l'adresse de la banque (10) du compte courant à partir duquel il veut effectuer le virement. La demande de virement (12) est un point de contrôle privilégié pour l'opérateur (1). Au moment de l'enregistrement (36,37,38) de la demande de virement (12), l'opérateur (1) peut effectuer les contrôles qu'il a décidés de mettre en place : contrôle au niveau du eCompte (31), vérification de sa validité (compte bancaire toujours actif, compte bloqué car déficitaire), limite maximum du montant d'un virement, calcul du montant cumulé par période avec limite de dépenses, nombre maximum et compteur de virements par période (etc.). Il peut aussi avertir l'acheteur (4) de coût supplémentaire en cas, par exemple, de virements vers des pays différents de celui où est géré le compte avec lequel il effectue les paiements. De plus, la gestion d'un identifiant, ou code d'identification (39) (mot choisi par les acheteurs) associé aux eComptes (31) permet à l'opérateur (1) d'empêcher l'utilisation aléatoire de numéros et, donc, l'envoi de demandes de confirmation non désirées. L'opérateur (1) contrôle aussi à ce moment-là les commerçants (6) et gère ainsi un contrôle crédit clients. Les comptes à créditer des commerçants sont ouverts dans une banque offrant ce moyen de paiement. Les commerçants sont identifiés par leur compte à créditer. L'opérateur (1), à l'enregistrement de la demande de virement (12), peut effectuer les contrôles et informer en interactif l'acheteur (4) du résultat des contrôles. L'enregistrement (47) de la demande de virement constitue la première relation interactive entre l'opérateur et l'internaute.

La demande de virement (12) enregistrée pour effectuer le paiement d'achats sur un site commercial (7) passe par le réseau Internet (5). Mais Internet (5) est un réseau ouvert, donc insécurisé. C'est pour cette raison que l'enregistrement (47) de la demande de virement ne constitue pas l'acte de paiement de la commande mais seulement la préparation de l'acte de paiement. L'acte de paiement pour l'acheteur (4) est concrétisé à partir du moment où il confirme une demande de confirmation (40). La confirmation (E) du virement est effectuée dans un environnement technique à l'écart du serveur (11a) et du réseau Internet (5). La sécurisation des paiements est faite à l'extérieur d'Internet (5). La confirmation (E) des virements est réalisée, préférentiellement, par un serveur de télécommunication (11b). Quelles que soient les techniques utilisées pour la sécurisation des paiements, les principes et les procédés de la présente invention ne sont pas remis en cause.

L'acheteur confirme une commande sur un site marchand (7), une demande de virement automatique est enregistrée sur le serveur (11a) Internet de l'opérateur (1) de services de la banque de l'acheteur (4). Cette demande de virement (12) est sortie de l'environnement technique d'Internet (5) pour être confirmée (40). La demande de confirmation (E) peut-être faite par différents canaux (14) tant qu'ils sont en dehors d'Internet (5). Continuons avec l'exemple qui a été retenu dans la présente invention. Le serveur (11b) de télécommunication de l'opérateur (1) de services de la banque de l'acheteur (4) traite cette demande de virement en envoyant une demande de confirmation (E) sur le mobile (15) de l'acheteur (4). Ce numéro de mobile (15) est connu à partir du moment où l'internaute (4) s'inscrit auprès de l'opérateur (1) de ce service de paiements ou auprès de sa banque (10). Ce numéro de mobile (15) est affecté au eCompte (31) de l'acheteur (4). Le serveur (11b) de télécommunication de l'opérateur de services (1) affiche sous forme de Short Message Sending (SMS) (41) une demande de confirmation contenant le nom (29) du commerçant (6) ainsi que les informations (30) propres à la commande et il affiche une indication d'action (42) (par exemple, une seule action telle qu'appuyer sur une touche du mobile (15) que l'acheteur (4) doit exécuter pour confirmer ou annuler la demande de confirmation.
Avec l'enregistrement de la demande de virement (12), la demande de confirmation constitue la deuxième relation interactive entre l'opérateur (1) et l'internaute (4). Mais, cette fois-ci, dans un environnement protégé, à l'inverse d'Internet. Cette seconde relation interactive en réseau fermé (14) permet un contrôle direct sur le compte bancaire de l'acheteur (4)(par exemple, le calcul du solde du compte avec la demande de virement en cours) et une communication sur le résultat de ce contrôle à l'internaute. Quand la demande de confirmation (E) est confirmée (40), le serveur (11b) dé télécommunication de l'opérateur de services (1) de la banque de l'acheteur (4) reçoit et stocke un virement confirmé. Le virement confirmé constitue vis-à-vis de l'acheteur (4) l'acte de paiement sécurisé d'un achat sur Internet. Il est envisageable de demander à l'acheteur de renseigner son code SIM pour qu'il confirme la demande. Le virement est alors autorisé (34) à être traité sur le compte de la banque de l'acheteur (4) par l'opérateur de services (1) pour payer le commerçant (6). Au moment d'effectuer la confirmation du virement, le mobile (15) peut toutefois être occupé ou hors du réseau (14). En conséquence, dans ces derniers cas, l'internaute (4) accède a posteriori à ses demandes de confirmation en attente (43) sur son mobile (15) comme il peut interroger volontairement son répondeur pour écouter ses messages. De même, il doit pouvoir consulter les demandes qu'il a déjà confirmées. Ces demandes seraient archivées avec un délai de rétention prédéfini.

L'acheteur (4) confirme une commande sur un site marchand (7), une demande de virement automatique est enregistrée sur le serveur (11a) Internet de l'opérateur de services (1) de la banque de l'acheteur (4). Cette demande de virement a été renseignée avec les paramètres passés du site commercial (7) lors de sa création. Cette demande de virement (12) est sortie de l'environnement technique d'Internet (5), puis est confirmée par l'acheteur (4) sur son mobile (15). Pour clore le cycle de paiement de la commande et permettre le déclenchement de la livraison de produits physiques ou le téléchargement de services en ligne avant que le compte bancaire du bénéficiaire (6) ne soit crédité, une notification (F) de paiement est envoyée au commerçant (6). Le commerçant (6) transmet pour cela son numéro de téléphone (44) réservé aux notifications en plus des informations propres à la commande. La notification est effectuée (35) par l'envoi sur un réseau (45) autre qu'Internet (5) d'un message contenant les informations propres à la commande et/ou à la facture. Cette notification peut prendre par exemple la forme d'un SMS (Short Message Sending) envoyé par l'opérateur de services (1) de la banque (10) de l'acheteur (4) au commerçant (6). Le réseau (45) permet la reconnaissance des numéros de téléphone appelants. Le commerçant (6) traite ce message dès sa réception et modifie le statut de la commande pour qu'elle soit considérée comme facturée. A posteriori, le commerçant (6) peut contrôler que tous les virements identifiés par des notifications ont bien été ordonnés (46) par l'opérateur de services (1) de la banque (10) de l'acheteur (4) et que son compte a bien été crédité du montant des commandes confirmées. En recevant les notifications, le commerçant (6) peut vérifier leur origine: dans la table des codes-adresse banques que le commerçant (6) a téléchargée du site de l'opérateur (1) figurent un ou plusieurs numéros dé téléphone (44) d'envoi des notifications.

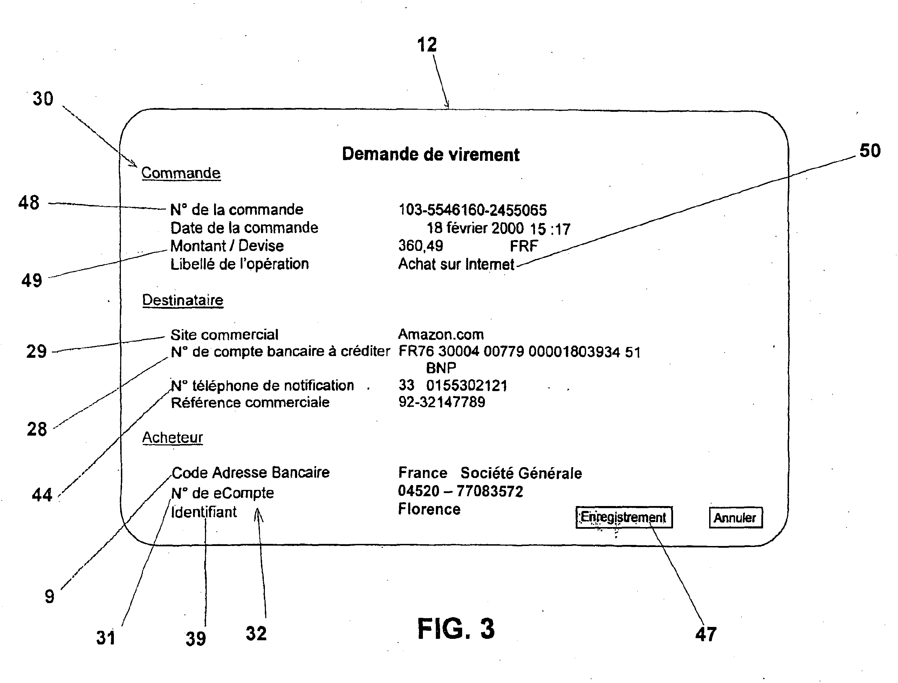

La Figure 3 représente un exemple de réalisation de demande de virement automatique créée sur le serveur (11a) de l'opérateur (1) de services de la banque de l'acheteur. L'acheteur (4) a sélectionné sur le site commercial (7) le code-adresse (9) de la banque du compte courant à partir duquel il veut effectuer le virement. Le serveur (11a) de-l'opérateur de services (1) de la banque de l'acheteur (4) transmet (26) la page de demande de virement (12) avec les informations nécessaires à son traitement bancaire, ainsi qu'une indication d'action (36)(par exemple, une seule action telle que cliquer sur le bouton d'une souris) que l'acheteur (4) doit exécuter pour enregistrer (47) ou annuler la demande de virement (12). Les informations nécessaires pour que la demande de virement (12) puisse être opérée sur le compte bancaire de l'acheteur doivent comporter les coordonnées du destinataire (28,29) et les données (30) relatives à la commande confirmée payée par le virement. Les coordonnées du destinataire contiennent le nom du commerçant (29), l'adresse bancaire complète (28) du destinataire, c'est-à-dire le numéro de compte bancaire (28) international à créditer, éventuellement le nom de la banque du bénéficiaire du virement et, enfin, l'indicateur pays et le numéro de téléphone (44) du commerçant pour la notification du paiement (l'affichage de cet indicateur pays et de ce numéro de téléphone n'est pas nécessaire). Les données (30) relatives à la commande sont représentées par la date et l'heure, le numéro (48) ou/et la facture gérée par le commerçant (6) et identifiant d'une manière unique pour le commerçant le paiement, le montant TTC et la devise (49) de la commande et, enfin, le libellé de l'opération (50) renseigné par défaut " Achat sur Internet ". Les coordonnées du destinataire (6) ainsi que celles du donneur d'ordre (4) et les données relatives à la commande sont transmises comme paramètres à la création (24) de la demande de virement (12) sur le serveur (11a) de l'opérateur de services (1) de la banque de l'acheteur. Les coordonnées de l'acheteur (4) contiennent le code-adresse (9) de la banque (10) du compte courant à partir duquel il veut effectuer le virement et le eCompte (31) identifiant pour la banque le compte bancaire du payeur. A ces coordonnées est rajouté un identifiant (39) passé aussi en paramètre qui permet une première vérification de l'authenticité de la demande de virement (12) pour l'opérateur de services (1). Les coordonnées (9,31) de l'acheteur (4) peuvent être renseignées manuellement sur chaque demande de virement (12) si elles n'ont pas été renseignées sur la commande et transmises comme paramètres. Cependant, l'acheteur (4) en téléchargeant du site (11a) de l'opérateur (1) un logiciel de gestion des coordonnées bancaires (9,31) pour la présente invention peut sauvegarder sur son ordinateur (16) ses coordonnées complètes. A la création (19) de la commande, le logiciel de l'ordinateur (16) recherche (33) les coordonnées renseignées (9,31). Etant donné qu'un ordinateur (16) peut être utilisé par plusieurs internautes pour effectuer des achats sur Internet (5) et que la présente invention permet le paiement sur Internet sans la circulation d'information sensible, le logiciel permet la gestion de plusieurs coordonnées bancaires (9,31) du payeur (4) sous forme de eCompte (31). Un seul de ses enregistrements est considéré comme principal par un drapeau. C'est cet enregistrement qui est repris par défaut comme coordonnées de l'acheteur (4) à la création d'une commande ou d'une demande de virement (12). L'ordinateur (16) permet néanmoins de sélectionner un autre enregistrement déjà renseigné dans le logiciel ou d'en renseigner un manuellement sur la demande de virement.

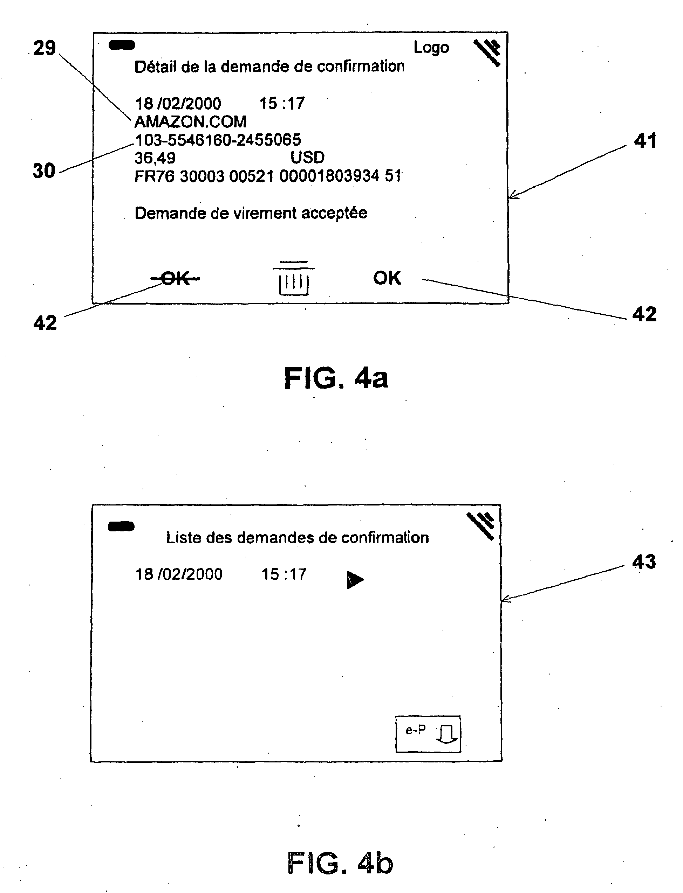

La Figure 4a représente un exemple de réalisation de demande de confirmation (E) envoyée automatiquement par le serveur (11b) de l'opérateur de services (1) de la banque de l'acheteur (4) sur son téléphone mobile (15). Cette demande (E) est envoyée après que l'acheteur (4) ait enregistré une demande de virement. Le serveur (11b) de télécommunication de l'opérateur de services (1) de la banque de l'acheteur (4) affiche l'écran (41) de demande de confirmation (E) avec les informations reprises de la demande de virement (12) et affiche une indication d'action (42) (par exemple, une seule action telle que appuyer sur une touche du mobile (15)) que l'acheteur (4) doit exécuter pour accepter ou annuler la demande de confirmation, qui est entièrement renseignée. C'est cette acceptation par l'internaute acheteur (4) qui constitue l'acte de paiement. L'acte de paiement est effectué en dehors d'Internet (5). Pour cette raison, le numéro de eCompte (31) n'est pas visible sur le mobile (15). Comme cela, le mobile (15) seul ne peut être utilisé aux dépens de son propriétaire (4) pour effectuer des virements et les confirmer. En ne connaissant pas le numéro de eCompte (31), il n'est pas possible de créer des demandes de virement (12) avec seulement le mobile (15). De cette manière, la sécurisation des paiements est renforcée. Le mobile (15) constitue ainsi l'instrument de paiement.

La figure 4b représente un exemple de réalisation d'une liste de demandes de confirmation (43) en attente sur le serveur (11a) de l'opérateur (1) de services de la banque de l'acheteur (4). Le procédé de la présente invention consiste à utiliser le mobile (15) pour confirmer des demandes de virement (12) pour effectuer des paiements. Cependant, il est tout à fait envisageable de considérer qu'au moment de confirmer une demande de virement le mobile (15) de l'acheteur (4) ne soit pas connecté au réseau (14) : il peut être éteint, par exemple. Dans ce cas, l'internaute acheteur (4) accède volontairement à la liste des demandes en attente (43) comme il peut interroger sa boîte vocale de messageries quand il veut. A partir de la liste des demandes en attente (43), il affiche le détail des demandes de confirmation. Comme le détail des demandes de confirmation reprend les informations renseignées lors de la création de la demande de virement (12), l'internaute acheteur (4) confirme ou annule les demandes en attente. Tout comme il peut accéder aux demandes en attente, il peut consulter la liste et le détail des demandes déjà confirmées.

Comme il va de soi, l'invention ne se limite pas aux seules spécifications techniques ci-dessus, données à titre d'exemple; elle embrasse, au contraire, toutes les variantes possibles de réalisations.

## Revendications

1. Procédé de paiement par télématique sécurisé contrôlant :
a) un réseau ouvert (5) utilisant le protocole TCP/IP, préférentiellement le réseau "Internet", organisé selon une architecture de type "client/serveur", et reliant entre eux un premier groupe de serveurs (6), au moyen desquels des commerçants effectuent des transactions commerciales, un deuxième groupe de serveurs (3) au moyen desquels ***des banques*** (10) effectuent des transactions financières, un groupe de clients (52), au moyen desquels des consommateurs (4) effectuent des transactions commerciales et financières, et un troisième groupe de serveurs (1), au moyen desquels un opérateur de services effectue des opérations de validation desdites transactions,
b) un réseau téléphonique (45) reliant ledit premier groupe de serveurs (6) audit troisième groupe de serveurs (1),
c) un réseau fermé (53) utilisant un mode de liaison de type "point à point" et reliant ledit deuxième groupe de serveurs (3) audit troisième groupe de serveurs (1),
d) un réseau de téléphonie mobile (14) reliant ledit troisième groupe de serveurs (1) auxdits consommateurs (4),
et comportant les étapes suivantes,
a) une étape préalable (A) au cours de laquelle ledit opérateur de services enregistre les données nominatives desdits consommateurs (4), comprenant au moins un numéro d'appel du réseau de téléphonie mobile (14), ainsi que les informations financières les concernant, dont le numéro de compte bancaire de chacun desdits consommateurs (4), et leur communique leurs données d'identification par des moyens totalement sécurisés, lesdites données d'identification comprenant :
- un code-adresse bancaire (9) comportant un premier champ d'identification du pays et un second champ d'identification de la banque (10) de chacun des consommateurs (4),
- un numéro d'identification (31) de compte électronique attaché audit numéro de compte bancaire,
- un code d'identification (39) de chacun des consommateurs (4),
b) une première étape (B) au cours de laquelle un acheteur (4) accède au moyen de l'un des clients (16) au site d'un vendeur hébergé au moyen de l'un des serveurs (7) dudit premier groupe (6) et effectue une commande de marchandises,
c) une deuxième étape (C) au cours de laquelle ledit acheteur (4) communique audit vendeur les deux premières des données d'identification précitées (9,31) le concernant sur ledit réseau ouvert (5) au moyen du client correspondant (16),
d) une troisième étape (D) au cours de laquelle ledit vendeur établit une liaison avec ledit opérateur au moyen du réseau ouvert (5) et lui transmet une chaîne d'identification, comprenant la raison sociale (29) et les coordonnées bancaires (28) dudit vendeur, ainsi que les deux premières données d'identification précitées (9,31) dudit acheteur (4), et les références (30) de ladite commande,
e) une quatrième étape (E) au cours de laquelle ledit opérateur établit une liaison au moyen du réseau de téléphonie mobile (14) et transmet audit numéro d'appel une demande d'authentification (41) constituée d'un message court (SMS) contenant ladite raison sociale (29), lesdites références (30) et l'indication d'une action à effectuer (42) par ledit acheteur (4) sur les touches de son téléphone portable (15),
f) une cinquième étape (F) au cours de laquelle ledit opérateur établit une liaison avec ledit vendeur au moyen ***dudit réseau téléphonique*** (45) et transmet la confirmation du paiement de ladite commande après vérification desdites informations financières, et
g) une sixième étape (G) au cours de laquelle ledit opérateur établit une liaison avec le deuxième groupe de serveurs (3) au moyen du réseau fermé (53) et transmet un ordre de transaction aboutissant au paiement dudit vendeur par ledit acheteur (4),
**caractérisé en que** lesdites données d'identification (9, 31, 39) communiquées au cours desdites deuxième et troisième étapes comprennent de plus le code d'identification (39) de chacun desdits consommateurs (4), ***ladite vérification au cours de ladite cinquième étape (F)*** comprenant le rapprochement dudit code-adresse bancaire (9), dudit numéro d'identification (31) et dudit numéro de compte bancaire, et en ce que :
a) ladite étape préalable (A) comporte le télédéchargement périodique à partir dudit troisième groupe de serveurs (1) par ledit premier groupe (6) de serveurs au moyen dudit réseau ouvert (5) de tables de correspondance entre lesdits codes-adresses ***bancaires*** (9) et les chemins sur ledit réseau ouvert (URL) ***identifiant, sur les serveurs de l'opérateur de services des banques (10) des acheteurs*,** ***les pages*** en langage hypertexte à balises (HTML) de demandes de virements (12) ***correspondantes de chacune desdites banquets (10),***
b) ladite troisième étape (D) se décompose en une première phase intermédiaire au cours de laquelle le vendeur transmet au moyen dudit réseau ouvert (5) sans sécurisation ladite chaîne d'identification (28, 29) à l'acheteur (4), ledit chemin correspondant au code-adresse bancaire (9) dudit acheteur (4) déterminé au moyen desdites tables ***et lesdites références (30)**, **et*** lui retransmet sans sécurisation les trois données d'identification (9, 31, 39), une deuxième phase intermédiaire au cours de laquelle ledit acheteur (4) accède à la page correspondante (12) ***de sa banque (10)*** parmi lesdites pages au moyen dudit réseau ouvert (5), et une troisième phase ou phase finale au cours de laquelle, outre ses trois données d'identification (9, 31, 39), ledit acheteur (4) communique également à l'opérateur sur le réseau ouvert sans sécurisation, au moyen de ladite page (12), ladite chaîne d'identification du vendeur et lesdites références (30).

2. Procédé de paiement par télématique sécurisé selon la revendication 1, **caractérisé en ce que** ladite chaîne d'identification (28, 29) comprend au moins un numéro de téléphone (44) dudit réseau téléphonique (45), et **en ce que** la notification de la confirmation de la commande est adressée par l'opérateur au vendeur de préférence sous la forme d'un message court (SMS).

3. Procédé de paiement par télématique sécurisé selon l'une quelconque des revendications 1 ou 2, **caractérisé en que** les codes-adresses ***bancaires*** (9) et les numéros d'identification (31) sont sauvegardés sur les poste-clients (16) des consommateurs.

4. Procédé de paiement par télématique sécurisé selon l'une quelconque des revendications 1 à 3, **caractérisé en ce que** l'action à effectuer par l'acheteur (4) pour s'identifier est la frappe du code SIM de son téléphone portable (15).

5. Procédé de paiement par télématique sécurisé selon l'une quelconque des revendications 1 à 4, **caractérisé en ce que** ladite quatrième étape (E) comporte une phase préalable au cours de laquelle ledit acheteur (4) établit une liaison avec ledit opérateur au cas où ledit acheteur (4) n'était pas connecté audit réseau téléphonique ***mobile*** (14), et reçoit une liste (43) comportant au moins ladite demande d'authentification.

6. Procédé de paiement par télématique sécurisé selon l'une quelconque des revendications 1 à 5, **caractérisé en ce que** les pages (12) de demandes de virement sont archivées sur ledit troisième groupe de serveurs (1) ***de l'opérateur de services.***

7. Procédé de paiement par télématique sécurisé selon l'une quelconque des revendications 1 à 6, **caractérisé en ce que:**
a) chacun des serveurs dudit premier groupe (6) présente au moins une page en langage hypertexte à balises (HTML) comportant :
- un premier formulaire de saisie du code-adresse *bancaire* (9) incluant une première liste déroulante offrant à l'acheteur un choix des pays et une seconde liste déroulante offrant un choix des banques,
- un second formulaire de saisie dudit numéro d'identification (31) et du code d'identification (39),
- un premier script (24) conforme à la norme logicielle CGI dont l'exécution est déclenchée par la confirmation (54) de la commande et produit la recherche dans la table de correspondance du code-adresse ***bancaire*** (9) et la lecture du chemin correspondant, la lecture des données constituant la chaîne d'identification (28, 29) du vendeur, la formation des références (30) de ladite commande, ainsi que la formation et le transfert à l'acheteur (16) d'une trame de données comprenant ledit chemin, ladite chaîne d'identification, lesdites références et les trois données d'identification (9, 31, 39) de l'acheteur (4),
- un deuxième script (25) conforme à la norme logicielle CGI dont l'exécution est déclenchée par la réception de la trame de données comprenant ledit chemin, ladite chaîne d'identification du vendeur, lesdites références et les trois données d'identification (9, 31, 39) de l'acheteur (4), envoyée par ledit vendeur, et produit la redirection (26) du navigateur dudit acheteur (4) vers ledit chemin, l'affichage (27) sur l'écran (16) du client dudit acheteur (4) de la demande de virement (12) correspondant audit chemin parmi lesdites demandes de virements, ainsi que le chargement dans la demande de virement de ladite chaîne d'identification du vendeur, desdites références de la commande, et des trois données d'identification (9, 31, 39) de l'acheteur (4), et
b) chacun des serveurs (7) dudit premier groupe (6) présente au moins un fichier contenant les données composant ladite chaîne d'identification du vendeur correspondant.

8. Procédé de paiement par télématique sécurisé selon l'une quelconque des revendications 6 ou 7 dépendant de 6, **caractérisé en ce que :**
a) lesdites demandes de virements (12) comportent un bouton d'enregistrement (47) et un troisième script (37) conforme à la norme logicielle CGI dont l'exécution est déclenchée par ledit bouton d'enregistrement (47) et produit le transfert des données de ladite demande de virement (12) audit opérateur (11a),
b) chacun des serveurs dudit troisième groupe (1) comporte un quatrième script (38) conforme à la norme logicielle CGI dont l'exécution est déclenchée par la réception des données de ladite demande de virement (12), et produit l'enregistrement et l'analyse des données de ladite demande de virement, ainsi que le déclenchement de ladite quatrième étape (E).

9. Procédé de paiement par télématique sécurisé selon l'une quelconque des revendications 7 ou 8, **caractérisé en ce que** la page comportant le formulaire de saisie comprend de plus un cinquième script (33) conforme à la norme logicielle CGI dont l'exécution est déclenchée à l'ouverture et produit la recherche, la lecture et le chargement des trois données d'identification (9, 31, 39) de l'acheteur (4) dans le formulaire, dans le cas où lesdites trois données d'identification (9, 31, 39) ont été sauvegardées par ledit acheteur (4) sur son poste-client (16).

## Claims

1. Secure telematic payment method controlling:
a) an open network (5) using the TCP/IP protocol, preferably the "Internet" network, organized in a "client/server" architecture and interconnecting a first group of servers (6) by means of which merchants perform commercial transactions, a second group of servers (3) by means of which *banks (10)* perform financial transactions; a group of clients (52) by means of which customers (4) perform commercial and financial transactions, and a third group of servers (1) by means of which a service operator performs operations for validating said transactions,
b) a telephone network (45) connecting said first group of servers (6) to said third group of servers (1),
c) a closed network (53) using a "point to point" connection mode and connecting said second group of servers (3) to said third group of servers (1),
d) a mobile telephone network (14) connecting said third group of servers (1) to said customers (4), and comprising the following steps,
a) a preliminary step (A) during which said service operator stores the personal data of said customers (4) comprising at least one call number of the mobile telephone network (14) as well as their financial information, including the bank account number of each of said customers (4), and sends them their identification data via completely secure means, said identification data comprising:
- a bank code/address (9) comprising a first country identification field and a second bank identification field (10) for each of the customers (4),
- an electronic account identification number (31) attached to said bank account number,
- an identification code (39) for each of the customers (4),
b) a first step (B) during which a buyer (4) accesses, by means of one of the clients (16), a merchant site hosted on one of the servers (7) of said first group (6) and places an order for merchandise,
c) a second step (C) during which said buyer (4) sends said merchant the first two aforementioned identification data (9, 31) on himself via said open network (5) by means of the corresponding client (16),
d) a third step (D) during which said merchant establishes a connection with said operator via the open network (5), sending it an identification string comprising said merchant's company name (29) and bank account information (28), along with the first two aforementioned identification data (9, 31) of said buyer (4), and the reference number (30) of said order,
e) a fourth step (E) during which said operator establishes a connection via the mobile telephone network (14) and transmits to said call number an authentication request (41) composed of a short message (SMS) containing said company name (29), said reference number (30) and the indication of an action to be performed (42) by said buyer (4) on the keys of his mobile telephone (15),
f) a fifth step (F) during which said operator establishes a connection with said merchant via said telephone network (45) and transmits the confirmation of the payment for said order after verifying said financial information, and
g) a sixth step (G) during which said operator establishes a connection with the second group of servers (3) via the closed network (53) and transmits a transaction order resulting in the payment of said merchant by said buyer (4),
**characterized in that** said identification data (9, 31, 39) sent during said second and third steps also include the identification code (39) of each of said customers (4), *said verification during said fifth step (F)* comprising the comparison of said bank code/address (9), said identification number (31) and said bank account number, and **in that**:
a) said preliminary step (A) comprises the periodic downloading from said third group of servers (1) by said first group (6) of servers, via said open network (5), of mapping tables between said bank codes/addresses (9) and the paths in said open network (URL) *that identify, on the servers of the service operator for the buyers' banks (10), the* payment request *pages* (12) in hypertext markup language (HTML) *corresponding to each of said banks (10)*,
b) said third step (D) breaks down into a first intermediate phase during which the merchant transmits via said unsecured open network (5) said identification string (28, 29) to the buyer (4), said path corresponding to the bank code/address (9) of said buyer (4) determined by means of said tables and *said reference number (30),* and non-securely transmits back to same the three identification data (9, 31, 39), a second intermediate phase during which said buyer (4) accesses the corresponding page (12) *of his bank (10)* among said pages via said open network (5), and a third or final phase during which, in addition to his three identification data (9, 31, 39), said buyer (4) also sends the operator via the unsecured open network, by means of said page (12), said identification string of the merchant and said reference number (30).

2. Secure telematic payment method according to claim 1, **characterized in that** said identification string (28, 29) also includes at least one telephone number (44) of said telephone network (45), and **in that** the notice of confirmation of the order is sent by the operator to the merchant, preferably in the form of a short message (SMS).

3. Secure telematic payment method according to either claim 1 or 2, **characterized in that** the bank codes/addresses (9) and the identification numbers (31) are saved in the customers' client terminals (16).

4. Secure telematic payment method according to any of claims 1 through 3, **characterized in that** the action to be performed by the buyer (4) in order to identify himself is the entry of the SIM code of his mobile telephone (15).

5. Secure telematic payment method according to any of claims 1 through 4, **characterized in that** said fourth step (E) comprises a preliminary phase during which said buyer (4) establishes a connection with said operator if said buyer (4) was not connected to said *mobile* telephone network (14), and receives a list (43) comprising at least said request for authentication.

6. Secure telematic payment method according to any of claims 1 through 5, **characterized in that** the payment request pages (12) are archived in said third group of servers (1) *of the service operator.*

7. Secure telematic payment method according to any of claims 1 through 6, **characterized in that:**
a) each of the servers of said first group (6) has at least one page in hypertext markup language (HTL) comprising:
- a first form for the entry of the *bank* code/address (9), including a first pull-down list offering the buyer a choice of countries and a second pull-down list offering a choice of banks,
- a second form for the entry of said identification number (31) and the identification code (39),
- a first script (24) compliant with the CGI software standard, the execution of which is triggered by the confirmation (54) of the order and results in the search in the mapping table for the *bank* code/address (9) and the reading of the corresponding path, the reading of the data that compose the merchant's identification string (28, 29), the formation of the reference number (30) of said order, and the formation and transfer to the buyer (16) of a data frame comprising said path, said identification string, said reference number and the three identification data (9, 31, 39) of the buyer (4),
- a second script (25) compliant with the CGI software standard whose execution is triggered by the reception of the data frame comprising said path, said merchant identification string, said reference number and the three identification data (9, 31, 39) of the buyer (4) sent by said merchant, and results in the redirection (26) of the browser of said buyer (4) to said path, the display (27) on the screen (16) of the client of said buyer (4) of the payment request (12) corresponding to said path among said payment requests, and the loading into the payment request of said merchant's identification string, said reference number of the order, and the three identification data (9, 31, 39) of the buyer (4), and
b) each of the servers (7) of said first group (6) has at least one file containing the data composing said identification string of the corresponding merchant.

8. Secure telematic payment method according to either claim 6 or 7 which depends on 6, **characterized in that:**
a) said payment requests (12) include a submit button (47) and a third script (37) compliant with the CGI software standard, the execution of which is triggered by said submit button (47) and results in the transfer of the data of each payment request (12) to said operator (11a),
b) each of the servers of said third group (1) includes a fourth script (38) compliant with the CGI software standard, the execution of which is triggered by the reception of the data of said payment request (12), and results in the storage and analysis of the data of said payment request, and the triggering of said fourth step (E).

9. Secure telematic payment method according to either claim 7 or 8, **characterized in that** the page comprising the entry form also includes a fifth script (33) compliant with the CGI software standard whose execution is triggered on opening and results in the search for, the reading, and the loading of the three identification data (9, 31, 39) of the buyer (4) into the form if said three identification data (9, 31, 39) have been saved by said buyer (4) on his client terminal (16).

## Patentansprüche

1. Gesichertes Telematik-Zahlungsverfahren, das Folgendes steuert:
a) ein offenes Netz (5), das das TCP/IP-Protokoll verwendet, vorzugsweise das "Internet"-Netz, welches gemäß einer Architektur vom Typ "Client/Server" organisiert ist, und welches eine erste Gruppe von Servern (6), mittels derer Händler geschäftliche Transaktionen durchführen, eine zweite Gruppe von Servern (3), mittels derer Banken (10) finanzielle Transaktionen durchführen, eine Gruppe von Clients (52), mittels derer Verbraucher (4) geschäftliche und finanzielle Transaktionen durchführen, und eine dritte Gruppe von Servern (1) miteinander verbindet, mittels derer ein Dienstebetreiber Operationen zur Validierung der Transaktionen durchführt,
b) ein Telefonnetz (45), das die erste Gruppe von Servern (6) mit der dritten Gruppe von Servern (1) verbindet,
c) ein geschlossenes Netz (53), das einen Verbindungsmodus vom Typ "Punkt-zu-Punkt" verwendet und die zweite Gruppe von Servern (3) mit der dritten Gruppe von Servern (1) verbindet,
d) ein Mobiltelefonnetz (14), das die dritte Gruppe von Servern (1) mit den Verbrauchern (4) verbindet,
und umfassend die folgenden Schritte:
a) einen vorherigen Schritt (A), in dessen Verlauf der Dienstebetreiber die persönlichen Daten der Verbraucher (4) speichert, umfassend wenigstens eine Rufnummer des Mobiltelefonnetzes (14), sowie die sie betreffenden Finanzinformationen, darunter die Bankkontonummer jedes der Verbraucher (4), und ihnen ihre Identifikationsdaten mittels vollständig gesicherter Mittel mitteilt, wobei die Identifikationsdaten umfassen:
- einen Bankadressencode (9), umfassend ein erstes Feld zur Identifikation des Landes und ein zweites Feld zur Identifikation der Bank (10) jedes der Verbraucher (4),
- eine elektronische Konto-Identifikationsnummer (31), die an die Bankkontonummer angefügt ist,
- einen Identifikationscode (39) für jeden der Verbraucher (4),
b) einen ersten Schritt (B), in dessen Verlauf ein Käufer (4) mittels eines der Clients (16) auf die Seite eines Verkäufers zugreift, die mittels eines der Server (7) der ersten Gruppe (6) gehostet ist, und eine Güterbestellung durchführt,
c) einen zweiten Schritt (C), in dessen Verlauf der Käufer (4) dem Verkäufer die zwei ersten von den genannten Identifikationsdaten (9, 31), die ihn betreffen, auf dem offenen Netz (5) mit Hilfe des entsprechenden Clients (16) mitteilt,
d) einen dritten Schritt (D), in dessen Verlauf der Verkäufer mit Hilfe des offenen Netzes (5) eine Verbindung mit dem Betreiber herstellt und ihm eine Identifikationskette sendet, umfassend den Firmennamen (29) und die Bankverbindungsdaten (28) des Verkäufers sowie die zwei ersten genannten Identifikationsdaten (9, 31) des Käufers (4) sowie die Referenzen (30) der Bestellung,
e) einen vierten Schritt (E), in dessen Verlauf der Betreiber mit Hilfe des Mobiltelefonnetzes (14) eine Verbindung herstellt und an die Rufnummer eine Authentifizierungsanfrage (41) sendet, gebildet durch eine Kurznachricht (SMS) enthaltend den Firmennamen (29), die Referenzen (30) und die Anzeige einer vom Käufer (4) auf den Tasten seines Mobiltelefons (15) durchzuführenden Aktion (42),
f) einen fünften Schritt (F), in dessen Verlauf der Betreiber mit Hilfe des Telefonnetzes (45) eine Verbindung mit dem Verkäufer herstellt und die Bestätigung der Bezahlung der Bestellung nach Überprüfung der finanziellen Informationen sendet, und
g) einen sechsten Schritt (G), in dessen Verlauf der Betreiber mit Hilfe des geschlossenen Netzes (53) eine Verbindung mit der zweiten Gruppe von Servern (3) herstellt und einen Transaktionsbefehl sendet, der zur Bezahlung des Verkäufers durch den Käufer (4) führt,
**dadurch gekennzeichnet, dass** die im Verlauf des zweiten und des dritten Schritts mitgeteilten Identifikationsdaten (9, 31, 39) ferner den Identifikationscode (39) jedes der Verbraucher (4) umfassen, wobei die Überprüfung im Verlauf des fünften Schritts (F) die Angleichung des Bankadressencodes (9), der Identifikationsnummer (31) und der Bankkontonummer umfasst, und dass
a) der vorherige Schritt (A) den periodischen Download, ausgehend von der dritten Gruppe von Servern (1) durch die erste Gruppe (6) von Servern mit Hilfe des offenen Netzes (5), von Korrespondenztabellen zwischen den Bankadressencodes (9) und den Pfaden auf dem offenen Netz (URL) umfasst, die auf den Servern des Dienstebetreibers der Banken (10) der Käufer getaggte (HTML) Hypertextsprachseiten von entsprechenden Überweisungsanfragen (12) von jeder der Banken (10) identifizieren,
b) der dritte Schritt (D) unterteilt ist in eine erste Zwischenphase, in deren Verlauf der Verkäufer mit Hilfe des offenen Netzes (5) ohne Sicherung der Identifikationskette (28, 29) dem Käufer (4) den Pfad entsprechend dem Bankadresscode (9) des Käufers (4) sendet, bestimmt mit Hilfe der Tabellen und der Referenzen (30), und ihm ohne Sicherung die drei Identifikationsdaten (9, 31, 39) zurücksendet, eine zweite Zwischenphase, in deren Verlauf der Käufer (4) mit Hilfe des offenen Netzes (5) auf die entsprechende Seite (12) seiner Bank (10) aus den Seiten zugreift, und eine dritte Phase oder Endphase, in deren Verlauf der Käufer (4) über seine drei Identifikationsdaten (9, 31, 39) hinaus ferner dem Betreiber auf dem offenen Netz ohne Sicherung mit Hilfe der Seite (12) die Identifikationskette des Verkäufers und die Referenzen (30) mitteilt.

2. Gesichertes Telematik-Zahlungsverfahren nach Anspruch 1, **dadurch gekennzeichnet, dass** die Identifikationskette (28, 29) wenigstens eine Telefonnummer (44) des Telefonnetzes (45) umfasst, und dass die Mitteilung der Bestätigung der Bestellung dem Verkäufer vom Betreiber vorzugsweise in der Form einer Kurznachricht (SMS) geschickt wird.

3. Gesichertes Telematik-Zahlungsverfahren nach einem der Ansprüche 1 oder 2, **dadurch gekennzeichnet, dass** die Bankadresscodes (9) und die Identifikationsnummern (31) bei den Client-Posts (16) der Verbraucher gespeichert werden.

4. Gesichertes Telematik-Zahlungsverfahren nach einem der Ansprüche 1 - 3, **dadurch gekennzeichnet, dass** die vom Käufer (4) durchzuführende Aktion, um sich zu identifizieren, das Eingeben des SIM-Codes seines Mobiltelefons (15) ist.

5. Gesichertes Telematik-Zahlungsverfahren nach einem der Ansprüche 1 - 4, **dadurch gekennzeichnet, dass** der vierte Schritt (E) eine vorherige Phase umfasst, in deren Verlauf der Käufer (4) eine Verbindung mit dem Betreiber herstellt, falls der Käufer (4) nicht mit dem Mobiltelefonnetz (14) verbunden war, und eine Liste (43) empfängt, die wenigstens die Authentifizierungsanfrage enthält.

6. Gesichertes Telematik-Zahlungsverfahren nach einem der Ansprüche 1 - 5, **dadurch gekennzeichnet, dass** die Seiten (12) von Überweisungsanfragen auf der dritten Gruppe von Servern (1) des Dienstbetreibers archiviert werden.

7. Gesichertes Telematik-Zahlungsverfahren nach einem der Ansprüche 1 - 6, **dadurch gekennzeichnet, dass:**
a) jeder der Server der ersten Gruppe (6) wenigstens eine Seite in getaggter (HTML) Hypertextsprache aufweist, umfassend:
- ein erstes Formular zur Erfassung des Bankadressencodes (9) einschließlich einer ersten Drop-Down-Liste, die dem Käufer eine Auswahl von Ländern anbietet, und eine zweite Drop-Down-Liste, die eine Auswahl von Banken anbietet,
- ein zweites Formular zum Erfassen der Identifikationsnummer (31) und des Identifikationscodes (39)
- ein erstes Skript (24) konform mit der Softwarenorm CGI, dessen Ausführung von der Bestätigung (54) der Bestellung ausgelöst wird und die Suche nach dem Bankadresscode (9) in der Korrespondenztabelle bewirkt sowie das Lesen des entsprechenden Pfads, das Lesen der Daten, die die Identifikationskette (28, 29) des Verkäufers bilden, die Bildung der Referenzen (30) der Bestellung sowie die Bildung und den Transfer zum Käufer (16) eines Gerüsts von Daten, umfassend den Pfad, die Identifikationskette, die Referenzen, und die drei Identifikationsdaten (9, 31, 39) des Käufers (4),
- ein zweites Skript (25) konform mit der Softwarenorm CGI, dessen Ausführung durch den Empfang des Gerüsts von Daten ausgelöst wird, umfassend den Pfad, die Identifikationskette des Verkäufers, die Referenzen und die drei Identifikationsdaten (9, 31, 39) des Käufers (4), das von dem Verkäufer geschickt wird, und die Weiterleitung (26) des Browsers des Käufers (4) zu dem Pfad bewirkt, die Anzeige (27) auf dem Bildschirm (16) des Clients des Käufers (4) der Überweisungsanfrage (12) entsprechend dem Pfad aus den Überweisungsanfragen sowie das Laden, in der Überweisungsanfrage, der Identifikationskette des Verkäufers, der Referenzen der Bestellung und der drei Identifikationsdaten (9, 31, 39) des Käufers (4) und
b) jeder der Server (7) der ersten Gruppe (6) wenigstens eine Datei aufweist, die die Daten enthält, welche die Identifikationskette des entsprechenden Verkäufers bilden.

8. Gesichertes Telematik-Zahlungsverfahren nach einem der Ansprüche 6 oder 7 in Abhängigkeit von Anspruch 6, **dadurch gekennzeichnet, dass:**
a) die Überweisungsanfragen (12) eine Speichertaste (47) und ein drittes Skript (37) konform mit der Softwarenorm CGI umfassen, dessen Ausführung ausgelöst wird durch die Speichertaste (47), und den Transfer der Daten der Überweisungsanfrage (12) zu dem Betreiber (11a) bewirkt.
b) jeder der Server der dritten Gruppe (1) ein viertes Skript (38) konform mit der Softwarenorm CGI umfasst, dessen Ausführung ausgelöst wird durch den Empfang der Daten der Überweisungsanfrage (12), und die Speicherung und die Analyse der Daten der Überweisungsanfrage bewirkt, sowie das Auslösen des vierten Schritts (E).

9. Gesichertes Telematik-Zahlungsverfahren nach einem der Ansprüche 7 oder 8, **dadurch gekennzeichnet, dass** die Seite, die das Erfassungsformular enthält, ferner ein fünftes Skript (33) konform mit der Softwarenorm CGI enthält, dessen Ausführung beim Öffnen ausgelöst wird und die Suche nach, das Lesen der und das Laden der drei Identifikationsdaten (9, 31, 39) des Käufers (4) in dem Formular bewirkt, falls die drei Identifikationsdaten (9, 31, 39) vom Käufer (4) auf seinem Client-Post (16) gespeichert worden sind.
